# FASCICULE DE BREVET EUROPEEN

(11) **EP 3 882 445 B1**
(45) Date de publication et mention de la délivrance du brevet: **07.05.2025**
(21) Numéro de dépôt: 21162716.1
(22) Date de dépôt: 16.03.2021
(51) Int. Cl.: F02B 67/04, F02B 67/06

(54) **CARTER DISTRIBUTION**
VERTEILERGEHÄUSE
TIMING COVER

(30) Priorité: 20.03.2020 FR 2002771
(43) Date de publication de la demande: 22.09.2021
(73) Titulaire: NEW H POWERTRAIN HOLDING, S.L.U., 47008 Valladolid (ES)
(72) Inventeur: Millon, Jean-Pierre, 78870 Bailly (FR); POMMERY, William, 95560 MONTSOULT (FR); TESSIER, Ludovic, 93370 Montfermeil (FR)
(74) Mandataire: Renault Group

(56) Documents cités:
- US-A- 2 736 819
- US-A1- 2003 015 166
- US-A1- 2012 058 850
- US-A1- 2013 068 201
- US-B1- 7 194 994

## Description

### Domaine technique de l'invention

La présente invention concerne un moteur à combustion interne de véhicule automobile.

La présente invention concerne un carter de distribution de moteur à combustion interne qui entraine un moteur électrique, notamment une génératrice de courant.

La présente invention concerne plus particulièrement un carter de distribution disposé entre un moteur thermique et un moteur électrique.

### Etat de la technique

Un véhicule automobile peut être équipé d'une motorisation thermique aidé par une machine électrique pour augmenter son efficacité ou étendre le rayon d'action du véhicule.

La machine électrique peut être une génératrice de courant apte à accroitre la charge d'une batterie pour un moteur électrique. Le moteur électrique est dans ce cadre apte à faire tourner ladite génératrice pour produire l'énergie électrique.

La machine électrique peut être également formée par un alterno-démarreur apte à aider un moteur thermique lors des phases de démarrage du véhicule. On parle alors de moteur hybride P0.

Le moteur électrique est connecté en permanence avec le moteur thermique.

De manière connue, l'architecture d'un moteur hybride P0 nécessite que le moteur électrique soit tourné vers la face de distribution du moteur thermique. De ladite face de distribution débouchent une extrémité d'entrainement d'un vilebrequin portant une roue d'entrainement apte à entrainer avec une courroie ou une chaine des accessoires dont une pompe à eau et un arbre à cames.

Il est connu de disposer la machine électrique accolée contre la paroi du moteur thermique. Toutefois un tel agencement augmente considérablement l'encombrement radial de l'ensemble composé des deux moteurs selon un axe transversal Y à l'axe longitudinal X du moteur thermique.

Le moteur électrique est généralement connecté avec le moteur thermique par une courroie qui entoure la roue d'entrainement du vilebrequin et la roue d'actionnement du moteur thermique. La transmission par courroie limite l'efficacité de ce type de moteur hybride P0.

La face de distribution du moteur thermique est recouverte par un carter de distribution qui permet une étanchéité aux vapeurs et huiles contenues entre la face de distribution du moteur thermique et ledit carter et nécessaires pour assurer les lubrifications des transmissions entre les axes tournants.

La publication DE102004005349-A1 propose un moteur hybride comprenant un moteur à combustion interne et une machine électrique dans une configuration P0 avec un train épicycloïdal reliant le moteur thermique au moteur électrique.

Un inconvénient est l'encombrement important de ladite motorisation, le moteur électrique est positionné contre le moteur thermique, notamment contre une face transversale du moteur thermique.

Un autre inconvénient concerne l'efficacité de la transmission entre le moteur thermique et le moteur électrique liée au rendement du train épicycloïdal.

Un autre inconvénient concerne la complexité de la liaison entre les deux moteurs et donc de l'assemblage/désassemblage des deux moteurs ensemble.

La publication EP1829725-A2 propose un agencement de moteur électrique en face de la face de transmission opposée à la face de distribution d'un moteur thermique.

La publication FR3022495-A1 propose un système de transmission hybride à une machine hybride agencée du côté de la face de transmission du moteur thermique.

Les publications US 2013/068201 A1 et US 2012/058850 A1 divulguent également des agencements pertinents dans le domaine de la connexion d'une machine électrique à un moteur à combustion. Ce type d'agencement est connu et permet un couplage du moteur thermique avec le moteur électrique.

Il ne permet pas de réaliser des agencements du côté de la face de distribution du moteur afin d'optimiser l'encombrement du groupe motopropulseur comprenant un moteur thermique et une machine électrique.

Le but de l'invention est de remédier à ces problèmes et un des objets de l'invention est une liaison entre les deux moteurs thermique et électrique tournée vers la face de distribution du moteur thermique simple et fiable.

### Présentation de l'invention

La présente invention concerne plus particulièrement un agencement de groupe motopropulseur de véhicule automobile comprenant un moteur thermique comportant un axe de rotation tenant une roue dentée d'entrainement solidaire en rotation avec un système d'actionnement disposé à l'extrémité d'un bras d'actionnement de machine électrique, ledit axe et ledit arbre d'actionnement étant sensiblement parallèles,

Caractérisé en ce que la machine électrique est agencée en vis-à-vis de la face de distribution du moteur thermique.

De manière avantageuse, la machine électrique est disposée selon l'axe longitudinal dans le prolongement du moteur thermique ce qui diminue l'encombrement transversal du groupe motopropulseur.

Selon d'autres caractéristiques de l'invention :
- le moteur thermique est séparé de la machine électrique par un carter de distribution.

De manière avantageuse, le carter de distribution est agencé entre le moteur thermique et le moteur électrique permettant une étanchéité du moteur électrique.
- la machine électrique est fixée sur le carter de distribution.

De manière avantageuse, le carter de distribution permet la fixation du moteur électrique et son accouplement avec le moteur thermique.
- le système d'actionnement est connecté au bras d'actionnement de la machine électrique par une liaison en rotation réversible.

De manière avantageuse, le système d'actionnement est connecté ou lié au bras d'actionnement de la machine électrique par une liaison en rotation réversible pour faciliter la mise en place et son enlèvement de la liaison de la machine électrique du groupe motopropulseur.
- le bras d'actionnement de la machine thermique traverse le carter de distribution.

De manière avantageuse, le bras d'actionnement du moteur électrique traverse le carter de distribution pour avoir un orifice de petit diamètre et garantir l'étanchéité.
- le bras d'actionnement est entouré par des roulements ou des paliers logés dans le carter de distribution.

De manière avantageuse, le bras d'actionnement est entouré par des roulements ou des paliers logés dans le carter de distribution pour réduire les frottements et améliorer l'efficacité du groupe.
- le système d'actionnement est porté par le carter de distribution.

De manière avantageuse, le système d'actionnement est solidaire du carter de distribution avec la machine électrique, il est de ce fait porté par ledit carter, ce qui permet d'avoir une compacité de l'ensemble et de faciliter l'assemblage du groupe motopropulseur.
- le système d'actionnement comprend une roue dentée d'actionnement coplanaire avec la roue d'entrainement du vilebrequin, tenue par une pièce tubulaire.

De manière le système d'actionnement comprend une roue dentée d'actionnement et une pièce tubulaire, ladite pièce tubulaire et la roue dentée sont coaxiales. La pièce tubulaire tient la roue dentée à une extrémité tournée vers la face de distribution du moteur thermique.
- la pièce tubulaire est maintenue par des roulements ou des paliers logés dans l'orifice d'accouplement percé dans le carter de distribution.

De manière avantageuse, la pièce tubulaire est maintenue dans l'orifice d'accouplement traversant le carter de distribution à l'aide de roulements ou de paliers permettant une liaison pivot de ladite pièce tubulaire avec un seul degré de liberté en rotation.
- le bras d'actionnement est emmanché dans la pièce tubulaire mobile en rotation, du système d'actionnement.

De manière avantageuse, le bras d'actionnement est entouré par la pièce tubulaire, notamment ledit bras est enfoncé dans la pièce tubulaire. Ledit bras est ainsi bien maintenu dans le carter de distribution.
- la pièce tubulaire est solidaire en rotation de la roue dentée.

De manière avantageuse, la pièce tubulaire est solidaire en rotation de la roue dentée pour former un maintien et un actionnement du bras d'actionnement de la machine électrique.
- la pièce tubulaire et la roue dentée d'actionnement sont issues d'une même pièce.

De manière avantageuse, la pièce tubulaire et la roue dentée d'actionnement sont d'une seule pièce obtenue de manière préférentielle par moulage, ce qui facilite l'obtention du système d'actionnement.
- la pièce tubulaire comprend des cannelures sur sa paroi intérieure.

De manière avantageuse, la pièce tubulaire comprend des cannelures pour permettre un accouplement en rotation et un accouplement/désaccouplement aisé.
- le bras d'actionnement comprend des dents engagées dans les cannelures de la pièce tubulaire

De manière avantageuse, le bras d'actionnement comprend
- la roue dentée du vilebrequin engrène directement sur la roue dentée d'actionnement du système d'actionnement de la machine électrique.

De manière avantageuse, la roue dentée du vilebrequin engrène directement sur la roue dentée du système d'actionnement de la machine électrique pour permettre une transmission de plus forte puissance.

### Brève description des figures

D'autres caractéristiques et avantages de l'invention apparaîtront à la lecture de la description qui suit de modes particuliers de réalisation de l'invention donnés à titre d'exemples non limitatifs et représentés sur les dessins annexés, dans lesquels :
[Fig. 1] est une vue schématique de groupe motopropulseur comportant une machine électrique.
[Fig. 2] est une vue schématique de la machine électrique.
[Fig. 3] est une vue de coupe longitudinale de l'agencement de la machine électrique accolée au moteur thermique.
[Fig. 4] est une vue schématique de l'agencement des roues dentées d'entrainement du vilebrequin et d'actionnement de la machine thermique.
[Fig. 5] est une vue schématique de la roue d'actionnement de la machine électrique.

Dans la description qui va suivre, des chiffres de référence identiques désignent des pièces identiques ou ayant des fonctions similaires.

Afin de réduire ou de limiter les générations de polluants, les véhicules automobiles actuels sont pourvus de motorisation hybride comprenant un moteur thermique ou à combustion interne dénommé ICE couplé avec un moteur électrique ou une machine électrique. La puissance électrique permet d'utiliser le moteur thermique dans des zones de meilleur rendement en augmentant la charge et en stockant le supplément d'énergie dans la batterie. La traction en électrique seul est marginale, surtout parce que la machine électrique est rarement déconnectable du moteur thermique.

Cette hybridation inclut généralement soit un alterno-démarreur de 48 V en P0. Sa puissance varie de 12 kW sous 48 V à environ 40 kW sous quelques centaines de volts, mais n'excède pas la moitié de celle du propulseur thermique.

On peut aussi disposer de prolongateur d'autonomie avec une motorisation hybride comportant un moteur thermique et une machine électrique qui est une génératrice de courant électrique. Le moteur thermique est connecté à la machine électrique et apte à faire tourner le bras d'actionnement du moteur électrique qui pourra alors produire de l'électricité. Cette électricité sera contenue dans une batterie pour être utilisé ensuite par un moteur électrique connecté aux roues du véhicule. Ce type de prolongateur d'économie est connu sous le nom de « Range extender ».

L'invention peut concerner une motorisation hybride P0 ou un prolongateur d'autonomie.

L'invention concerne un groupe motopropulseur comportant un moteur thermique ou à combustion interne (non représenté) et une machine électrique 14, ledit moteur thermique comprenant un axe de rotation tenant une roue dentée 21 d'entrainement engrenant une roue dentée d'actionnement 11 d'un système d'actionnement 10 de la machine électrique 14, ledit système d'actionnement 10 est solidaire en rotation avec un bras d'actionnement 15 de la machine électrique.

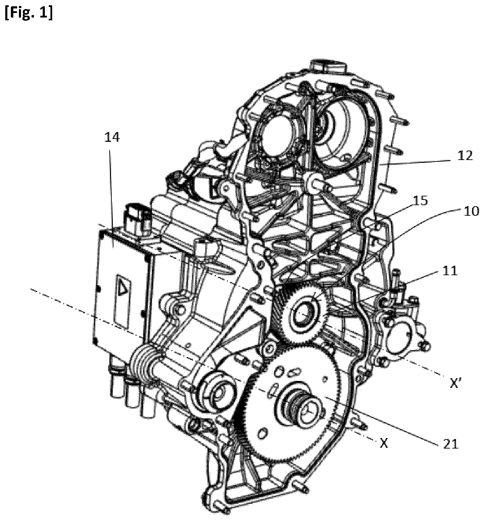

La figure 1 représente un carter de distribution 12 qui est destiné à recouvrir la face de distribution du moteur thermique. On rappelle que la face de distribution est opposée à la face de transmission du moteur thermique qui comporte des accouplements avec par exemple un volant moteur ou une boite de vitesses.

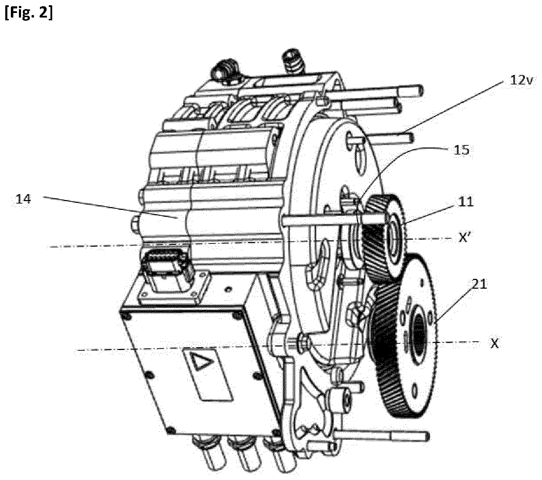

Sur ledit carter de distribution 12 est montée la machine électrique 14 avec son bras d'actionnement 15 tenant à une extrémité qui est tournée vers le moteur thermique la roue dentée d'actionnement 11. Comme représenté en figure 2, la roue dentée d'actionnement 11 est coplanaire avec la roue dentée d'entrainement 21, laquelle est solidaire au moins en rotation de l'extrémité du vilebrequin (non représenté). La machine électrique est ainsi séparée du moteur thermique par le carter de distribution. Elle est disposée dans le prolongement du moteur thermique selon l'axe longitudinal X dudit moteur.

Les deux roues dentées 11, 21 et la face de distribution sont recouvertes par le carter de distribution 12.

Les roues dentées d'actionnement 11 de la machine électrique et d'entrainement 21 du vilebrequin sont disposées du côté de la face de distribution du moteur thermique, ce qui permet d'accoupler normalement ledit moteur thermique côté transmissions à une boite de vitesses et à un train roulant de véhicule automobile dans le cas d'une hybridation de type P0.

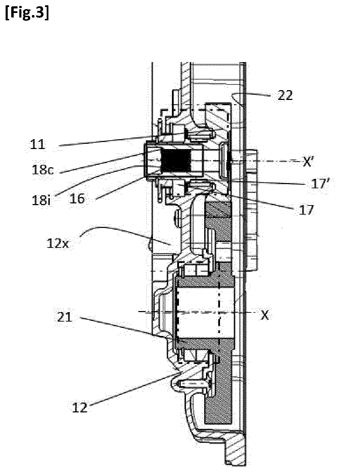

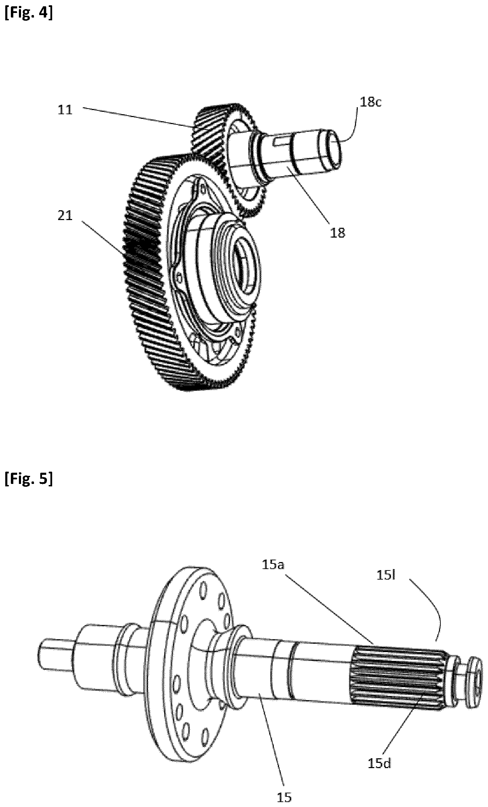

De manière avantageuse, selon les figures 3 et 4, la roue dentée d'entrainement 21 du moteur thermique, qui est portée par une extrémité d'un vilebrequin (non représenté) débouchant de la face de distribution du moteur, engrène directement la roue dentée d'actionnement 11, laquelle est tenue en bout du bras d'actionnement de la machine électrique, c'est-à-dire qu'il y a un contact entre les deux roues 11,21 sans pièce intermédiaire, pour transmettre de façon efficace un couple important de l'une à l'autre des deux roues, sans être limité par un élément intermédiaire tel qu'une courroie ou chaîne.

Selon la figure 3, la machine électrique est fixée sur la paroi externe 12x du carter de distribution 12 tournée vers l'extérieur du moteur thermique par des moyens de fixation qui peuvent comprendre des vis 12v. Elle présente son axe d'actionnement X' parallèle à l'axe longitudinal X du moteur thermique, ici du vilebrequin. De cette manière avantageuse, il est simple de désolidariser le moteur électrique de l'ensemble du groupe motopropulseur pour accéder au moteur thermique.

Pour faciliter la compréhension, le moteur thermique présente une forme de parallélépipède rectangle et la face de distribution est plane et verticale, orthogonale à l'axe d'entrainement X du vilebrequin. Les deux roues dentées d'entrainement 21 et d'actionnement 11 sont coplanaires et parallèles à la face de distribution.

Comme représenté sur les figures 2 et 3, le bras d'actionnement 15 de la machine thermique 11 traverse le carter de distribution 12 par un orifice percé 16 dit d'accouplement dans ledit carter. Ledit bras 15 est maintenu selon l'axe X' de manière préférentielle par des roulements 17, 17' ou des paliers logés dans ledit orifice 16. De cette façon, l'axe du bras d'actionnement de la machine électrique est maintenu parallèle à l'axe longitudinal X d'entrainement du vilebrequin et mobile en rotation avec un minimum de frottement. Sur la figure 3, on voit l'orifice d'accouplement 16 débouchant de la face externe 12x du carter de distribution 12. Au contraire, en ce qui concerne l'axe d'entrainement du vilebrequin ainsi que la roue d'entrainement 21 sont totalement recouverts par le carter de distribution 12.

Pour faciliter la mise en place de la machine électrique, selon un mode réalisation préféré, le bras d'actionnement 15 de ladite machine électrique 14 est inséré dans le système d'actionnement 10 de ladite machine électrique de manière réversible. Le bras d'actionnement pourra être engagé dans le système d'actionnement 10, et désengagé dudit système de manière simple.

Ledit système d'actionnement 10 comprend une pièce tubulaire 18 traversant le carter de distribution 12, ladite pièce tubulaire est montée mobile en rotation dans ledit carter. Le bras d'actionnement 15 est emmanché dans la pièce tubulaire 18. La pièce tubulaire 18 traverse l'orifice d'accouplement 16.

Selon la figure 3, le système d'actionnement 10 est porté par le carter de distribution. La pièce tubulaire 18 est maintenue dans l'orifice d'accouplement 16 par des roulements 17,17'. On distingue deux roulements pour maintenir la pièce tubulaire et réaliser une liaison pivot, ici un premier roulement à billes 17 et un second roulement à aiguilles 17'. Ladite liaison pivot permet un seul degré de liberté ici en rotation. La pièce tubulaire 18 tient la roue dentée d'actionnement 11 à une extrémité tournée vers la face de distribution.

Ainsi que représenté en figure 4, la pièce tubulaire est fixée solidaire à la roue dentée d'actionnement 11. De manière préférentielle, la pièce tubulaire 18 et la roue dentée d'actionnement 11 sont issues d'une seule pièce obtenue de façon préférentielle par moulage et formant le système d'actionnement 10 de la machine électrique.

La pièce tubulaire comporte des cannelures 18c sur sa paroi intérieure 18i.

La figure 5 montre le bras d'actionnement 15 de la machine électrique 14. Ledit bras s'étend depuis la machine électrique 14 vers le moteur thermique. Le bras comprend une partie d'accouplement 15a à son extrémité libre 15l qui est tournée vers le moteur thermique quand la machine électrique est montée contre le carter de distribution du moteur thermique. Ladite partie d'accouplement comprend des dentures 15d de forme sensiblement complémentaire aux cannelures 18c de la pièce tubulaire 18 du système d'actionnement 10 au jeu de montage près.

Le bras d'actionnement 15 de la machine thermique est ainsi emmanché de façon réversible dans la pièce tubulaire 18 du système d'actionnement de sorte que ledit bras d'actionnement 15 et le système d'actionnement 10 sont solidaires en rotation.

Ensuite la machine électrique peut être désolidarisée facilement du carter de distribution 12 après dévissage des vis de fixation 12v et en faisant coulisser selon l'axe X' le bras d'actionnement 15 le long de la pièce tubulaire 18.

Le montage de la machine électrique en liaison avec le moteur thermique peut comprendre les étapes suivantes :
1. Le système d'actionnement 10 est monté sur le carter de distribution, la pièce tubulaire est maintenue par les deux roulements.
2. Le carter de distribution peut être présenté devant la face de distribution du moteur thermique.
3. La roue dentée d'entrainement 21 du vilebrequin est montée sur l'extrémité du vilebrequin et est fixée au vilebrequin.
4. Un dispositif d'engagement peut permettre l'engagement des dents de la roue dentée d'actionnement 11 du système d'actionnement 10 de la machine électrique 12 dans la roue dentée d'entrainement 21 du vilebrequin et réduire sensiblement les jeux de montage.
5. Le carter de distribution est ensuite fixé au moteur thermique avec le vissage des vis de fixation 12v.

L'objectif est atteint :
Le moteur thermique est accouplé à la machine électrique par l'intermédiaire du carter de distribution de façon simple et fiable ave une transmission de couple importante.

Comme il va de soi, l'invention ne se limite pas aux seules formes d'exécution de cette prise, décrites ci-dessus à titre d'exemples, elle en embrasse au contraire toutes les variantes.

Par exemple, la roue dentée d'actionnement 11 peut être montée solidaire de la face de distribution du moteur thermique.

Le système d'actionnement 10 peut être solidaire de la face de distribution du moteur thermique.

## Revendications

1. Agencement de groupe motopropulseur de véhicule automobile comprenant un moteur thermique comportant un axe de rotation tenant une roue dentée d'entrainement (21) solidaire en rotation avec un système d'actionnement (10) disposé à l'extrémité d'un arbre d'actionnement (15) de machine électrique (14), ledit axe de rotation et ledit arbre d'actionnement étant sensiblement parallèles,
**Caractérisé en ce que** la machine électrique (14) est agencée en vis-à-vis de la face de distribution du moteur thermique.

2. Agencement selon la revendication 1, **caractérisé en ce que** le moteur thermique est séparé de la machine électrique (14) par un carter de distribution (12).

3. Agencement selon la revendication 2, **caractérisé en ce que** la machine électrique (14) est fixée sur le carter de distribution (12).

4. Agencement selon l'une quelconque des revendications 2 à 3, **caractérisé en ce que** le système d'actionnement (10) est connecté au bras d'actionnement (15) de la machine électrique par une liaison en rotation réversible.

5. Agencement selon l'une quelconque des revendications 2 à 4, **caractérisé en ce que** le bras d'actionnement (15) de la machine thermique (14) traverse le carter de distribution (12).

6. Agencement selon l'une quelconque des revendications 2 à 5, **caractérisé en ce que** le bras d'actionnement (15) est entouré par des roulements ou des paliers logés dans un orifice traversant d'accouplement (16) creusé dans le carter de distribution (12).

7. Agencement selon l'une quelconque des revendications 2 à 6, **caractérisé en ce que** le système d'actionnement (10) est porté par le carter de distribution (12).

8. Agencement selon l'une quelconque des revendications 6 à 7, **caractérisé en ce que** le système d'actionnement (10) comprend une roue dentée d'actionnement (11) coplanaire avec la roue d'entrainement (21) du vilebrequin, tenue par une pièce tubulaire (18).

9. Agencement selon la revendication 8, **caractérisé en ce que** la pièce tubulaire (18) est maintenue par des roulements ou des paliers logés dans l'orifice d'accouplement (16) creusé dans le carter de distribution (12).

10. Agencement selon la revendication 8 ou 9, **caractérisé en ce que** le bras d'actionnement (15) est emmanché dans la pièce tubulaire (18) mobile en rotation.

11. Agencement selon l'une quelconque des revendications 8 à 10, **caractérisé en ce que** la pièce tubulaire (18) est solidaire en rotation de la roue dentée d'actionnement (11).

12. Agencement selon l'une quelconque des revendications 8 à 11, **caractérisé en ce que** la pièce tubulaire (18) et la roue dentée d'actionnement (11) sont issues d'une même pièce.

13. Agencement selon l'une quelconque des revendications 8 à 12, **caractérisé en ce que** la pièce tubulaire (18) comprend des cannelures (18c) sur sa paroi intérieure (18i).

14. Agencement selon la revendication 13, **caractérisé en ce que** le bras d'actionnement (15) comprend des dents engagées dans les cannelures (18c) de la pièce tubulaire (18).

15. Agencement selon l'une quelconque des revendications 1 à 14, **caractérisé en ce que** la roue dentée d'entrainement (21) du vilebrequin engrène directement sur la roue dentée d'actionnement (11) du système d'actionnement (10) de la machine électrique.

## Patentansprüche

1. Kraftfahrzeug-Antriebsstranganordnung, umfassend einen Verbrennungsmotor mit einer Drehachse, auf der ein Antriebszahnrad (21) gehalten wird, das drehfest mit einem Betätigungssystem (10) verbunden ist, das am Ende einer Betätigungswelle (15) einer elektrischen Maschine (14) angeordnet ist, wobei die Drehachse und die Betätigungswelle im Wesentlichen parallel sind,
**dadurch gekennzeichnet, dass** die elektrische Maschine (14) gegenüber der Gaswechselsteuerungsseite des Verbrennungsmotors angeordnet ist.

2. Anordnung nach Anspruch 1, **dadurch gekennzeichnet, dass** der Verbrennungsmotor durch ein Steuergehäuse (12) von der elektrischen Maschine (14) getrennt ist.

3. Anordnung nach Anspruch 2, **dadurch gekennzeichnet, dass** die elektrische Maschine (14) am Steuergehäuse (12) befestigt ist.

4. Anordnung nach einem der Ansprüche 2 bis 3,
**dadurch gekennzeichnet, dass** das Betätigungssystem (10) über eine drehrichtungsumkehrbare Verbindung mit dem Betätigungsarm (15) der elektrischen Maschine verbunden ist.

5. Anordnung nach einem der Ansprüche 2 bis 4,
**dadurch gekennzeichnet, dass** der Betätigungsarm (15) der Verbrennungskraftmaschine (14) das Steuergehäuse (12) durchquert.

6. Anordnung nach einem der Ansprüche 2 bis 5,
**dadurch gekennzeichnet, dass** der Betätigungsarm (15) von Wälzlagern oder Lagern umgeben ist, die in einer im Steuergehäuse (12) ausgebildeten Kopplungsdurchgangsbohrung (16) aufgenommen sind.

7. Anordnung nach einem der Ansprüche 2 bis 6,
**dadurch gekennzeichnet, dass** das Betätigungssystem (10) vom Steuergehäuse (12) getragen wird.

8. Anordnung nach einem der Ansprüche 6 bis 7,
**dadurch gekennzeichnet, dass** das Betätigungssystem (10) ein Betätigungszahnrad (11) umfasst, das in einer Ebene mit dem Antriebsrad (21) der Kurbelwelle liegt und von einem rohrförmigen Teil (18) gehalten wird.

9. Anordnung nach Anspruch 8, **dadurch gekennzeichnet, dass** das rohrförmige Teil (18) von Wälzlagern oder Lagern gehalten wird, die in der im Steuergehäuse (12) ausgebildeten Kopplungsbohrung (16) aufgenommen sind.

10. Anordnung nach Anspruch 8 oder 9, **dadurch gekennzeichnet, dass** der Betätigungsarm (15) in das drehbewegliche rohrförmige Teil (18) eingepresst ist.

11. Anordnung nach einem der Ansprüche 8 bis 10,
**dadurch gekennzeichnet, dass** das rohrförmige Teil (18) drehfest mit dem Betätigungszahnrad (11) verbunden ist.

12. Anordnung nach einem der Ansprüche 8 bis 11,
**dadurch gekennzeichnet, dass** das rohrförmige Teil (18) und das Betätigungszahnrad (11) aus einem Stück sind.

13. Anordnung nach einem der Ansprüche 8 bis 12,
**dadurch gekennzeichnet, dass** das rohrförmige Teil (18) an seiner Innenwand (18i) Keilnuten (18c) umfasst.

14. Anordnung nach Anspruch 13, **dadurch gekennzeichnet, dass** der Betätigungsarm (15) Zähne umfasst, die in die Keilnuten (18c) des rohrförmigen Teils (18) eingreifen.

15. Anordnung nach einem der Ansprüche 1 bis 14,
**dadurch gekennzeichnet, dass** das Antriebszahnrad (21) der Kurbelwelle direkt in das Betätigungszahnrad (11) des Betätigungssystems (10) der elektrischen Maschine eingreift.

## Claims

1. Motor vehicle power train arrangement comprising a heat engine having a rotational axis holding a drive gearwheel (21) in conjoint rotation with an actuating system (10) arranged at the end of an actuating shaft (15) of an electric machine (14), said rotational axis and said actuating shaft being substantially parallel,
**characterized in that** the electric machine (14) is arranged opposite the timing surface of the heat engine.

2. Arrangement according to claim 1, **characterized in that** the heat engine is separated from the electric machine (14) by a timing cover (12).

3. Arrangement according to claim 2, **characterized in that** the electric machine (14) is secured to the timing cover (12).

4. Arrangement according to any of claims 2 to 3, **characterized in that** the actuating system (10) is connected to the actuating arm (15) of the electric machine by a reversible rotational connection.

5. Arrangement according to any of claims 2 to 4, **characterized in that** the actuating arm (15) of the heat machine (14) passes through the timing cover (12).

6. Arrangement according to any of claims 2 to 5, **characterized in that** the actuating arm (15) is surrounded by bearings housed in a coupling through-hole (16) made in the timing cover (12).

7. Arrangement according to any of claims 2 to 6, **characterized in that** the actuating system (10) is supported by the timing cover (12).

8. Arrangement according to any of claims 6 to 7, **characterized in that** the actuating system (10) comprises an actuating gearwheel (11) which is coplanar with the drive wheel (21) of the crankshaft and is held by a tubular part (18).

9. Arrangement according to claim 8, **characterized in that** the tubular part (18) is held by bearings housed in the coupling hole (16) made in the timing cover (12).

10. Arrangement according to claim 8 or 9, **characterized in that** the actuating arm (15) is fitted into the rotatable tubular part (18).

11. Arrangement according to any of claims 8 to 10, **characterized in that** the tubular part (18) is connected to the actuating gearwheel (11) for conjoint rotation.

12. Arrangement according to any of claims 8 to 11, **characterized in that** the tubular part (18) and the actuating gearwheel (11) are made from the same part.

13. Arrangement according to any of claims 8 to 12, **characterized in that** the tubular part (18) comprises grooves (18c) on its inner wall (18i).

14. Arrangement according to claim 13, **characterized in that** the actuating arm (15) comprises teeth engaged in the grooves (18c) of the tubular part (18).

15. Arrangement according to any of claims 1 to 14, **characterized in that** the drive gearwheel (21) of the crankshaft directly meshes with the actuating gearwheel (11) of the actuating system (10) of the electric machine.
